(19) Europäisches Patentamt
European Patent Office
Office européen des brevets

(11) Publication number: **0 045 217**
**B1**

(12) **EUROPEAN PATENT SPECIFICATION**

(45) Date of publication of patent specification: **12.12.84**

(51) Int. Cl.$^3$: **C 08 L 83/04**, C 08 K 5/54, C 09 J 3/16

(21) Application number: **81303464.2**

(22) Date of filing: **28.07.81**

(54) **Improved bonding silicone rubber.**

(30) Priority: **28.07.80 US 172874**

(43) Date of publication of application:
**03.02.82 Bulletin 82/05**

(45) Publication of the grant of the patent:
**12.12.84 Bulletin 84/50**

(84) Designated Contracting States:
**BE DE FR GB IT SE**

(56) References cited:
**GB-A-2 030 999**

(73) Proprietor: **DOW CORNING CORPORATION**
**3901 S. Saginaw Road**
**Midland Michigan 48640 (US)**

(72) Inventor: **Skostins, Olgerts**
**3319 Fernside**
**Midland Michigan 48640 (US)**

(74) Representative: **Laredo, Jack Joseph et al**
**Elkington and Fife High Holborn House 52/54**
**High Holborn**
**London, WC1V 6SH (GB)**

**EP 0 045 217 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Background of the invention

Field of the invention

This invention relates to a composition useful as an additive for heat activated organic peroxide vulcanizable silicone rubber to provide a bonding characteristic to the rubber which causes it to strongly adhere to a wide variety of substrates. The invention includes silicone rubber compositions containing the additive and methods of using.

Description of the prior art

Silicone rubber has become one of the useful specialty elastomers available to industry. In many applications it is desirable to bond silicone rubber to various substrates. Silicone rubber does not normally adhere to solid surfaces as strongly as desired. Over the years, various methods have been devised to improve the bonding of silicone rubber to different types of substrates. These methods include the use of a primer on the surface of the substrate as well as additives to the unvulcanized silicone rubber.

In US—A—2,751,314 issued to Keil, it was noted that methods of bonding some few silicone rubbers to some few solid materials was known, but no single means for bonding many combinations was known.

Keil teaches a method of adhering silicone rubber to the surface of a solid comprising first depositing a titanium compound coating on the surface, then depositing on the titanium coating a coating consisting essentially of a mixture of partially hydrolyzed alkylpolysilicate and toluene soluble organopolysiloxanes. If desired, additional layers of silicone rubber can be deposited. The method is stated to provide adhesion to many types of surfaces. In his Example 4, he showed that a room temperature vulcanizing rubber prepared from dimethylsiloxane polymer, diatomaceous earth, ethylpolysilicate, and lead octoate did not adhere to an aluminum panel without his primer system. In Example 5, he states that equivalent results are obtained on steel, cadmium steel, nickel, tin, copper, porcelain, resin laminates and glass cloth.

US—A—3,261,739, issued July 19, 1966, to Porter teaches a laminated glass windshield containing as an interlayer, a layer of transparent organosilicon elastomer. In the preferred embodiment, the interlayer comprises an organopolysiloxane gum, filler, ethylpolysilicate and dicumyl peroxide catalyst. The cured elastomer was said to have excellent adhesion to glass, electrically conducting films deposited on glass and polyvinyl butyral, but there is no indication of the actual bond strength obtained.

Smith-Johannsen in US—A—3,325,440 teaches the addition of unhydrolyzed organosilicates to curable organopolysiloxanes to improve the reversion resistance at high temperatures. Ethylorthosilicate is shown to be useful in his system. When his procedure is followed, the composition is stated to adhere to a variety of substrates, but no indication is given as to the degree or type of adhesion achieved.

Foster in US—A—3,379,607 issued April 23, 1968, teaches that bonding of cured diorganosiloxanes to solid substrates is best accomplished through the use of a primer system. Foster teaches that adding a compound, such as methacryloxypropyltrimethoxysilane, to the uncured elastomer as a rule possesses the disadvantage of inducing physical property changes in the polysiloxane which are undesirable. Foster shows a primer obtained by contacting a phosphorus containing compound with a silane containing at least one $CH_2$=C— group. Foster obtained cohesive failure, at least in some cases.

DeZuba et al. in US—A—3,730,932 issued May 1, 1973, teach a self-bonding, heat-curable composition that includes a maleate or silylmaleate as an additive to promote bonding to a substrate. In US—A—3,813,364 they show that cyanurates, isocyanurates, silyl-cyanurates, and silylisocyanurates are also useful.

In US—A—3,794,612, issued February 26, 1974, Plueddemann teaches a silicone rubber composition having improved adhesion to unprimed substrates. His composition comprises a silicone rubber stock and 2 to 10 parts of diallylphthalate. Plueddemann theorized that the diallylphthalate functions because it is relatively compatible with the unvulcanized silicone rubber, but separates because it is only partially compatible during vulcanization and thus provides a surface layer having adhesive properties. The mixture is further enhanced by the addition of an alkoxy silane having a vinyl or allyl radical. A mixture containing diallyl o-phthalate and vinyltrimethoxysilane adhered to glass and aluminum, giving cohesive failure of the rubber when tested after 4 hours in boiling water.

Mine, et al. in US—A—4,033,924 issued July 5, 1977, point out in their discussion of the prior art that curable silicone rubbers and resins which cure through the application of heat and peroxide catalyst do not possess completely satisfactory adhesion to other materials. They also point out the disadvantages of using primer systems. They then teach a composition which consists of an organopolysiloxane, filler, organic peroxide catalyst and an organosilicon compound containing at least one epoxy group, at least one alkyl group, and at least one low molecular weight alkenyl group or hydrogen atom bound to silicon. The composition, when cured in contact with a surface, adheres to

metals, plastics, ceramics, fibers, wood, paper and others. Their examples show cohesive failure on bonding to ceramic surfaces and plastic surfaces, while improved peel adhesion was shown for various metal surfaces. Without the epoxy containing additive, the compositions did not bond sufficiently to give cohesive failure; the adhesive failure was at much lower values.

Smith in US—A—4,177,301 issued December 4, 1979, then shows a primer system suitable for bonding both room temperature vulcanizing silicone rubber and heat vulcanizable silicone rubber. Smith teaches that self-bonding, heat vulcanizable silicone rubber compositions, which he has previously mentioned as incorporating a silyl isocyanurate or silylmaleate as a self-bonding additive, have difficulties. He points out that they are usually a very complex type of system and they require the addition or presence in the composition of very complex chemical self-bonding additives, which unduly increase the cost of the composition. He further states that without the use of a primer such compositions do not have as high an adherence to the substrate as would be desired in some cases, as when the cured silicon elastomer is under water immersion for a substantial period of time. Smith teaches the use of a primer produced by reacting an alkylacrylate or alkylmethacrylate with an acrylate silane then adding additional acrylate silane.

In spite of the vast teaching of the art, much of it conflicting, there is still need to improve the bonding capabilities of heat vulcanizable silicone rubber compositions to substrates. The systems using a primer require a separate step in the bonding process which increases costs. In many cases the primers must be carefully applied and cured in order to function properly. The primed surface must be adhered to within a short period of time in order to obtain the best results. Many of the systems using additives have disadvantages such as failure to form bonds with a wide variety of substrates and failure to maintain satisfactory bonding during use conditions such as exposure to elevated temperature or water immersion.

Satisfactory bonding between heat vulcanizable silicone rubber and a variety of substrates is very complex, particularly when an additive approach is used. The additive must provide all the advantages of improved bonding without adversely reacting with the silicone rubber to degrade the rubber properties.

In order for a bonding system to be completely satisfactory, the bond between the rubber and the substrate should be at least as strong as the rubber itself. When the rubber is forced away from the substrate, the failure should be by cohesive failure of the rubber. In a bonded rubber, such cohesive failure should occur with the widest possible variety of substrates.

U.K. Patent No. 2030999 describes a different method of bonding a silicone rubber to a substrate surface. The silicone rubber composition is of the type commonly known as "high viscosity" and is vulcanized through the use of organic peroxides. An acryloxyalkylsilane is incorporated into the silicone rubber composition. The latter is then heated to vulcanize it while it is in contact with the substrate surface, bonding of the composition to the substrate occurring during vulcanization. The silicone rubber contains organic radicals selected from vinyl, methyl, phenyl and 3,3,3-trifluoropropyl together with reinforcing and extending silica fillers and an anticrepe-hardening agent. The composition also contains from 0.1 to 5 parts of the organic peroxide vulcanizing agent and from 0.1 to 1.5 parts of the acryloxyalkylsilane. The latter has the formula:

$$CH_2{=}\overset{R}{\overset{|}{C}}-\overset{O}{\overset{\|}{C}}-O-R'-\overset{R_a}{\overset{|}{Si}}X_{(3-a)}$$

in which R is selected from hydrogen and methyl radicals, R' is an alkylene radical of from 1 to 4 carbon atoms, inclusive, X is a radical selected from alkoxy radicals of from 1 to 3 carbon atoms inclusive, and the acetoxy radical, and a is from 0 to 2 inclusive.

It is preferred that R should be a methyl radical, a be 0 and X a methoxy or acetoxy radical. The most preferred silane is $\gamma$-methacryloxypropyltrimethoxysilane. The test results showed superior bondings to various substrates as compared with the effect of other additives tested.

## Summary of the invention

An improved method of obtaining bonding between heat activated, organic peroxide vulcanized silicone rubber and a wide variety of substrates has been developed. An additive containing polydiorganosiloxane gum, ethylpolysilicate, acryloxyalkylsilane, and filler, when mixed with a heat activated, organic peroxide vulcanizable silicone rubber, causes the rubber to bond to substrates when the rubber is vulcanized in contact with the substrate. It is not necessary to first prime the surface of the substrate in order to obtain the improved bond.

Silicone rubber bonded through the use of the method of this invention adheres to a wider number of substrates than previously known methods, the adhesion being sufficient to cause cohesive failure when the bond is sufficiently stressed to cause failure.

## Description of the invention

This invention relates to an adhesion additive composition for improving the bonding of heat

vulcanized silicone rubber to substrates, the composition being in the form of a paste capable of storage in the absence of moisture, the composition consisting essentially of:

(a) 100 parts by weight of polydiorganosiloxane gum, wherein the organic radicals are selected from the group consisting of methyl, vinyl, phenyl, 3,3,3-trifluoropropyl radicals, and mixtures thereof,
(d) sufficient filler to yield a paste and characterized in that it includes
(b) from 70 to 220 parts by weight of ethylpolysilicate,
(c) from 10 to 40 parts by weight of acryloxyalkylsilane of the formula:

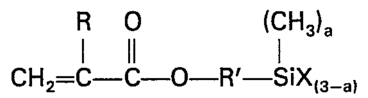

in which R is selected from the group consisting of hydrogen and methyl radical, R′ is an alkylene radical of from 1 to 4 inclusive carbon atoms, X is a radical selected from the group consisting of lower alkoxy radicals of from 1 to 3 inclusive carbon atoms and acetoxy radical, and *a* is from 0 to 2 inclusive.

This invention also relates to a heat vulcanizable silicone rubber composition comprising 100 parts by weight of silicone rubber base consisting essentially of polydiorganosiloxane containing organic radicals selected from the group consisting of methyl, vinyl, phenyl, and 3,3,3-trifluoropropyl, reinforcing silica filler, and anticrepe-hardening agent; from 0 to 150 parts by weight of siliceous extending filler with an average particle size of less than 25 micrometres and a surface area of less than 50 $m^2/g$; from 0.1 to 5 parts by weight of organic peroxide suitable for vulcanizing the silicone rubber base; and characterized in that it includes from 1 to 5 parts by weight ethylpolysilicate; and from 0.1 to 1 part by weight acryloxyalkylsilane as defined in (c) above.

A method of carrying out this invention comprises mixing silicone rubber stock comprising silicone rubber base, filler if desired, and organic peroxide, with an amount of adhesion additive composition per 100 parts by weight of silicone rubber base sufficient to provide from 1 to 5 parts by weight of ethylpolysilicate and from 0.1 to 1 part by weight of acryloxyalkylsilane. After mixing the ingredients, the resulting mixture is placed in contact with a substrate to which bonding is desired, and then this combination is heated to a vulcanization temperature to produce a silicone rubber bonded to a substrate.

In this invention, a silicone rubber "base" is a mixture of polydiorganosiloxane, reinforcing silica filler, anticrepe-hardening agent, and possibly other minor ingredients. When this base is mixed with organic peroxide, additional reinforcing and/or extending filler, and other minor ingredients, the mixture is then called a "stock".

A unique combination of ingredients has been discovered which produces outstanding bonds between heat-vulcanizable silicone rubber compositions and a variety of substrates. Unmodified silicone rubber does not ordinarily bond to substrate surfaces. When such unmodified silicone rubber is vulcanized in contact with a surface, the rubber can usually be pulled from the surface with the failure being between the surface and the silicone rubber.

Various methods of improving the bond between a substrate and silicone rubber have been advanced, including the use of various primers and the use of additives to the silicone rubber composition. The use of primers entails an additional step in the bonding process which may be undesirable due to the additional time and cost involved. The use of additives to the silicone rubber composition may be undesirable due to the effects of the additive upon the physical and chemical properties of the cured rubber.

It has been found that when a silicone rubber composition is prepared with from 1 to 5 parts by weight of ethylpolysilicate and from 0.1 to 1 part by weight of acryloxyalkylsilane to 100 parts by weight of silicone rubber base, the composition bonds to a wide variety of substrates that it is in contact with when vulcanized. Within the defined range, the optimum amount of ethylpolysilicate and acryloxyalkylsilane varies with both the nature of the silicone rubber composition and the nature of the substrate surface to be bonded. As the filler content of the silicone rubber composition is increased, more of the ethylpolysilicate and acryloxyalkylsilane are needed. The preferred amount of ethylpolysilicate is from 1.5 to 3.5 parts by weight with the amount of acryloxyalkylsilane from 0.2 to 0.5 parts by weight. The most preferred amount of ethylpolysilicate is 2.4 parts by weight with 0.45 parts by weight of gamma-methacryloxypropyltrimethoxysilane as the acryloxyalkylsilane, all being based on 100 parts by weight of silicone rubber base.

By using the combination of ethylpolysilicate and acryloxyalkylsilane in silicone rubber compositions, bonding to a wide variety of substrates can be achieved without significantly effecting the physical properties of the cured silicone rubber. Mixing ethylpolysilicate and a silicone rubber base can improve the adhesion, however, large amounts are required and the physical properties are adversely effected. The adhesion, using ethylpolysilicate, can provide cohesive type adhesion failure with some substrates if the amount of ethylpolysilicate is large enough. Mixing acryloxyalkylsilane and

a vinyl-containing silicone base can improve the adhesion to provide cohesive type failure with a variety of substrates if the peroxide used for vulcanization is a vinyl specific organic peroxide. Using the combination of ethylpolysilicate and acryloxyalkylsilane allows the use of both vinyl specific organic peroxide and non-vinyl specific organic peroxide without causing the physical properties to be significantly altered, and provides adhesion of the cohesive type to a variety of substrates. Also the use of the combination of ethylpolysilicate and acryloxysilane can be used in silicone rubber bases with and without vinyl.

The silicone rubber composition can be produced by mixing silicone rubber base, filler, organic peroxide, ethylpolysilicate, and acryloxyalkylsilane by means of conventional mixing equipment such as doughmixers and 2 roll rubber mills such as are normally used to compound silicone rubber. There is no critical order of mixing, however, the filler is normally mixed with the base, the ethylpolysilicate and acryloxyalkylsilane being added with the filler, then adding the organic peroxide.

The ethylpolysilicate and acryloxyalkylsilane may also be combined with polydiorganosiloxane gum and filler to yield an adhesion additive composition in the form of a paste. The adhesion additive composition is storage table in this paste form, provided the paste is stored in a container which prevents moisture from contacting the paste. When a combination of silicone rubber bonded to a substrate is desired, a silicone rubber stock may be produced by mixing the paste with a silicone rubber base, filler, and organic peroxide.

Useful adhesion additive compositions are produced from 100 parts by weight of polydiorganosiloxane gum, from 70 to 220 parts by weight of ethylpolysilicate, and from 10 to 40 parts by weight of acryloxyalkylsilane, the mixture being thickened with sufficient filler to yield a paste. A particularly useful filler is reinforcing silica in that about 10 percent by weight filler is sufficient to produce a paste when 50 percent by weight ethylpolysilicate and 10 percent by weight acryloxyalkylsilane are combined with 30 percent polydiorganosiloxane gum. A preferred adhesion additive composition is produced using from 110 to 160 parts by weight of ethylpolysilicate and from 20 to 35 parts by weight of acryloxyalkylsilane.

Since the ethylpolysilicate and acryloxyalkylsilane can hydrolyze and condense when contacted with moisture, the adhesion additive composition should be stored in air tight containers to prevent excessive contact with moisture in the air.

Silicone rubber base used in the present invention is a mixture of polydiorganosiloxane, reinforcing silica filler, anti-crepe hardening agent, and minor amounts of additives. Such bases are commercially available. The polydiorganosiloxane contains organic radicals selected from the group consisting of methyl, vinyl, phenyl, and 3,3,3-trifluoropropyl, and mixtures thereof, the polydiorganosiloxane preferably having at least 50 percent of the organic radicals being methyl and no more than 2 percent being vinyl. The polydiorganosiloxane is endblocked with hydroxyl radical or the organic radicals defined above, preferably with methyl or vinyl radical. The polydiorganosiloxanes are commonly of a viscosity of from 1000 Pa·s up to and including non-flowing gums. The polydiorganosiloxanes are well known in the art and are commercially available.

The silicone rubber base contains a reinforcing silica filler to improve the physical strength of the silicone rubber. Reinforcing silica fillers have surface areas of from 150 to greater than 400 $m^2/g$. These reinforcing silica fillers are well known in the art and can be obtained commercially. The reinforcing filler can be untreated, treated, or treated in situ during the manufacture of the silicone rubber base. The treated reinforcing silica fillers can be treated by any of the conventional methods described in the prior art, wherein the treating agents include organosilanes, organosiloxanes and silazanes. The amount of reinforcing filler can vary from 10 to as much as 100 parts by weight and the usual amount varying between 15 to 75 parts by weight per 100 parts by weight of the polydiorganosiloxane.

A silicone rubber base can also contain anticrepe-hardening agents. These anticrepe-hardening agents are used to reduce the reaction between the polydiorganosiloxane and the reinforcing silica that causes the base to become harder or pseudo-vulcanized upon shelf aging. Such a reaction can cause the base to become too "nervy" to be of further use.

Suitable anticrepe-hardening agents are well known in the art. They can be such additives as hydroxyl endblocked short chain polydimethylsiloxane fluids. If the reinforcing filler is treated as discussed above, the silicone rubber base may not need an additional anticrepe-hardening agent.

The silicon rubber base may also contain minor amounts of additives to improve, among other things, the heat stability, handling, compression set and oil resistance. A single silicone rubber base may be used or a mixture of bases may be used to obtain the desired range of physical properties for the cured silicone rubber.

In use, a silicone rubber base can be extended with an extending filler to increase the bulk of the composition. This helps to lower the cost of the finished part as the extending fillers are much lower in cost than the silicone rubber base.

The addition of an extending filler may also lower the bond strength of a composition intended to be bonded to a substrate surface. The method of this invention provides a means whereby compositions containing large amounts of siliceous extending filler can still be successfully bonded to substrate surfaces. As higher levels of siliceous extending filler are added, it becomes more difficult to achieve a satisfactory bond to a substrate surface. The maximum amount of siliceous extending filler

that can be used and still obtain satisfactory bonding to a substrate surface will depend upon the nature of the silicone rubber base used and the extending filler used. The maximum is about 150 parts by weight of extending filler per 100 parts by weight of silicone rubber base.

The known siliceous extending fillers used with silicone rubber bases are finely ground particles of heat stable inorganic materials with an average particle size of under 25 micrometres. The finest extending fillers approach a particle size and configuration such that they have a surface area of as high as 50 $m^2/g$. Examples of siliceous extending fillers include ground quartz, diatomaceous earth and glass.

The silicone rubber composition of this invention contains an organic peroxide suitable for vulcanizing the polydiorganosiloxane in the silicone rubber base. When the polydiorganosiloxane does not contain any vinyl radicals, it must be vulcanized with organic peroxides that are efficient in crosslinking such polydiorganosiloxanes. Such organic peroxides are labeled "non-vinyl specific" and are represented by such well known organic peroxides as benzoyl peroxide, dicumyl peroxide, and 2,4-dichlorobenzoylperoxide. When the polydiorganosiloxane contains vinyl radicals, it can be vulcanized with either "non-vinyl specific" or "vinyl specific" organic peroxides. Representative of the vinyl specific organic peroxides are ditertiary-butyl peroxide and 2,5-bis-(tert-butylperoxy)-2,5-dimethylhexane. All these organic peroxides and their properties are well known in the art. The properties of the vulcanized silicone rubber can be altered by the type and amount of organic peroxide used to vulcanize the composition. Typical changes due to such choices are well recognized in the art. The organic peroxide can be present in amounts of from 0.1 to 5 parts by weight per 100 parts by weight of silicon rubber base, preferably from 0.5 to 2.0 parts by weight.

A required component of the silicone rubber composition of this invention is an acryloxyalkylsilane of the formula

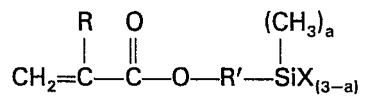

in which R is selected from the group consisting of hydrogen and methyl radical, R′ is an alkylene radical of from 1 to 4 inclusive carbon atoms, X is a radical selected from the group consisting of alkoxy radicals of from 1 to 3 inclusive carbon atoms and acetoxy radical, and *a* is from 0 to 2 inclusive. The silane is preferred where R is a methyl radical, *a* is 0, and X is a methoxy radical. The most preferred silane is gamma-methacryloxypropyl-trimethoxysilane because of its efficiency in causing the vulcanized silicone rubber to bond to a substrate surface against which the silicone rubber has been vulcanized.

The acryloxyalkylsilanes used in this invention are known in the art. Those in which *a* is zero are disclosed in US—A—3,567,497 by Plueddemann and Clark which describes those silanes and their method of manufacture. United States Patent No. 3,567,497 shows the method of manufacture. The same method can be used to produce silanes in which *a* is 1 or 2 by substituting the appropriate $(CH_3)HSiX_2$ or $(CH_3)_2HSiX$ for the $HSiX_3$ shown in Plueddemann et al.

The third general method of preparation described by Plueddemann et al. is applicable where R′ is a methylene radical in which the chloroalkylsilane used would be of the formula $ClCH_2(CH_3)_a\ SiX_{3-a}$. Such chloroalkylsilanes where *a* is 1 or 2 can be prepared as taught in US—A—2,510,149 by Speir which shows such preparations. The preferred gamma-methacryloxypropyltrimethoxysilane is commercially available.

Another required component of the composition of this invention is ethylpolysilicate. A suitable commercial product is sold by Stauffer Chemical Company, Specialty Chemical Division, Akron, Ohio, under the tradename "Ethylsilicate—40". This product is polymerized so that it is the equivalent of 40 percent by weight $SiO_2$. It has an average formula of

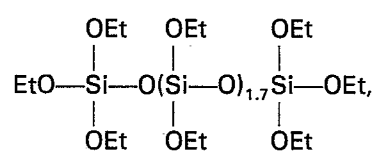

where Et is the $—C_2H_5$ radical.

The compositions of this invention bond to a substrate surface when the composition is cured while in contact with the substrate surface during the vulcanization of the composition. The compositions can be formed in contact with the desired substrate by any of the well known methods of forming elastomeric curable compositions such as press molding, calendering and extruding. Since the compositions bond without primers, special precautions must be taken during vulcanizing operations to ensure that the vulcanized composition adheres only to surfaces where adhesion is desirable. The surfaces of press plates or molds for instance, must be well coated with a suitable release agent.

Suitable release agents for the method of this invention are heavy coats of a 2 to 5 percent by weight solution of detergent in water, or more preferably, a coating of fluorocarbon mold release agent. For flat surfaces, a sheet of polytetrafluoroethylene is satisfactory.

The silicone rubber composition of this invention bonds to different types of substrates. Excellent bonds have been produced with siliceous, metal, and plastic substrate surfaces. Silicone rubber compositions of this invention have been combined with glass fabric, aluminum, cold rolled steel, stainless steel, copper, and brass to give bonds which failed cohesively.

The formed compositions of this invention can be vulcanized by any suitable means that will cause decomposition of the organic peroxide. Heating is the preferred method. The time and temperature necessary to cause vulcanization of the composition is dependent upon the organic peroxide chosen, the method of heating, the method of shaping the composition to the desired configuration, and the thickness of the part. The temperature that is appropriate for a given set of conditions is well known in the silicone rubber art. Typical temperatures are from 110°C to 175°C for molding operations and from about 200°C to as high as 300°C for the ovens used in continuous hot air vulcanization operations.

For a process of press molding or injection molding, the best choice of organic peroxide is the vinyl specific type, preferably 2,5-bis-(tert-butylperoxy)-2,5-dimethylhexane. The use of the vinyl specific organic peroxide with the ethylpolysilicate and acryloxyalkylsilane provides a means for bonding silicone rubber to substrates without the need for post curing.

For a process of calendering or extruding where the heating for the vulcanization is done in hot gases such as a hot air oven, the best choice of organic peroxide is the nonvinyl specific type, preferably 2,4-dichlorobenzoyl peroxide. The use of a nonvinyl specific organic peroxide requires additional heating to generate a cohesive bond between the silicone rubber and the substrate. For example, it has been found that heating the vulcanized silicone rubber-substrate combination for 30 minutes at 170°C provides a satisfactory bond where the substrate is aluminum, cold rolled steel or stainless steel.

Bonding a silicone rubber to a substrate can be accomplished by many processes. The same silicone rubber base can be used in these processes and the only change required is the selection of the organic peroxide which best suits the vulcanization process for the manufacture of a silicone rubber-substrate laminate. If only the acryloxyalkylsilane were used, the organic peroxide is limited to a vinyl specific type, the silicone rubber base requires the presence of vinyl radical, and the vulcanization process is thus limited. A silicone rubber composition prepared using only gamma-methacryloxypropyltrimethoxysilane to promote adhesion and 2,4-dichlorobenzoyl peroxide would not cohesively bond to aluminum or stainless steel even after heating the vulcanized assembly for four hours at 200°C. Silicone rubber compositions of this invention cohesively bond with aluminum and stainless steel with less heating using a non-vinyl specific peroxide.

The method of this invention is useful for making silicone rubber articles that are bonded to a substrate surface. Examples of such articles are metal enclosed shaft seals, shock mounts, rolls, and various types of fabric reinforced articles such as tubing, tapes, and diaphragms. The heat vulcanizable silicone rubber composition of this invention is particularly useful in that it bonds to a greater variety of substrates with a stronger bond than previous compositions.

When bonding to a substrate, the bond should be at least as strong as the rubber itself. If such a bond is produced, there will be rubber left adhering to the substrate surface when sufficient force is applied to remove the cured rubber from the substrate. Such a failure mode is known as cohesive failure. If the bond is weaker than the rubber, the failure is between the substrate surface and the rubber. This type of failure is known as adhesive failure. As is shown in the following examples, the composition of this invention gives bonds of such strength that the failure mode is of the cohesive type.

The following examples illustrate the invention. All parts are parts by weight.

Example 1

A. A series of adhesion tests were performed to illustrate the advantages of an adhesion additive in a silicone rubber stock for bonding to a variety of substrates without use of a primer.

Mixtures were compounded consisting of:

a. 100 parts of a commercial silicone rubber base described as a vinyl-containing silicone rubber designed for compounding general purpose stocks. The base was translucent with a specific gravity after curing of 1.12. The base consisted of a vinyl-containing polydimethylsiloxane, a reinforcing fume silica, and a hydroxyl-endblocked polydimethylsiloxane fluid to prevent crepe-hardening of the base,
b. 2 parts of iron oxide paste, where indicated in Table I,
c. 1 part of organic peroxide vulcanizing agent consisting of 50 weight percent 2,5 bis(tert-butylperoxy)-2,5-dimethylhexane dispersed in an inert carrier powder, and
d. the adhesion additives shown in Table I.

After each mixture was compounded with the appropriate adhesion additives as shown in Table I, the mixtures were prepared into test samples by one of two methods. In the first method, the mixture

was calendered onto a piece of glass fabric. Metal panels were cleaned by wiping thoroughly with 1,1,1-trichloroethane, then with acetone. The calendered fabric was press molded against the cleaned surface of the metal panels with the silicone rubber surface of the calendered fabric against the metal surface. Two pieces of the calendered fabric were also molded against each other with the silicone rubber surfaces in contact. All moldings were vulcanized for 10 minutes at 171°C.

In the second method, a piece of glass fabric was placed on the bottom of a chase, a sheet of uncured silicone rubber mixture placed on top and then the samples of materials to be adhered to were placed against the silicone rubber mixture. The assembly was then press molded for 10 minutes at 171°C.

After molding, each sample was cut into 25.4 mm wide strips. The strips were then pulled from the various substrate surfaces using a standard tensile testing machine with a rate of 50.8 mm per minute. The strips were pulled from the substrate surface at an angle of 180°. The glass fiber fabric samples were pulled from one another at a total angle of 180° or at 90° each at the point of peeling apart.

The method of failure was noted for each sample. When the rubber is pulled off the surface, the failure point can be between the surface and the rubber at varying levels of force required to obtain separation, or the failure point can be within the rubber, leaving a rubber layer adhered to the substrate. The former type of adhesion failure is referred to as adhesive failure, shown as A in the tables. The latter type of failure is referred to as cohesive failure, shown as C in the tables. If the bond strength between the substrate surface and the rubber is stronger than the strength of the rubber itself, the failure will be cohesive.

The results shown in Table I show that the stock containing the adhesion additives of this invention is superior to a stock containing either of the single adhesion additives as it provides higher peel strengths and the preferred cohesive type of failure.

B. A series of mixtures were prepared as in A consisting of 100 parts of the base of A, 50 parts of ground quartz extending filler, 1 part of the organic peroxide vulcanizing agent of A and the amounts of adhesion additive shown in Table II.

The mixtures were made into test samples and tested following the second method defined in A.

The results listed in Table II show that the combination of additives gives better results than either additive alone. It is possible to obtain cohesive type failure using only gamma-methacryloxypropyltrimethoxysilane, but by using the combination of this invention it is possible to obtain cohesive type failures combined with higher peel strengths. By using the combination of this invention less acryloxyalkylsilane is required, thus providing an opportunity of lowering the cost of the ingredients.

Example 2

A commercial silicone rubber base similar to that of Example 1 but having a specific gravity of 1.09 was catalyzed with 1.0 part of the organic peroxide vulcanizing agent of Example 1. Various amounts of ethylpolysilicate (Y) and gamma-methacryloxypropyltrimethoxysilane (X) were added as adhesion additives as shown in Table III.

These mixtures were molded on various substrates and test samples prepared as described in Example 1 by molding the mixtures against the substrates with a glass fabric backing. The degree of adhesion was evaluated by pulling the bonded strip from the substrate and judging the type of failure and effort required to produce failure. The results are shown in Table III. A rating of 1 is no adhesion. Ratings 2 through 4 are progressively stronger bonds with the failure being of the adhesive type. Rating 5 is a cohesive type failure with a rubber layer left adhered to the substrate.

The results show that the combination of ethylpolysilicate and gamma-methacryloxypropyltrimethoxysilane gives improved adhesion over either alone. The combination provides superior adhesion to all of the substrates tested while the individual additives do not provide good adhesion to all of the substrates. The combination of this invention provides a means of bonding to the widest variety of different types of substrates with a single composition.

Example 3

A commercial silicone rubber base, falling within the scope of the claims and designated as being suitable for hose production because of its high green strength, having a specific gravity of 1.20, was compounded with various amounts of ground quartz filler, ethylpolysilicate (Y), and gamma-methacryloxypropyltrimethoxysilane (X) as shown in Table IV, then catalyzed with 1 part of the organic peroxide vulcanizing agent of Example 1. These mixtures were then molded, test samples prepared and tested as described in Example 2. The results are shown in Table IV.

The combination of adhesion additives provides a composition which bonds to a greater degree to more different substrates than does a mixture containing either one alone, even if more additive is used. The results also show that the addition of filler tends to lower the degree of adhesion.

Example 4

The base of Example 3 was compounded with 50 parts by weight of ground quartz, 1 part of heat stability additive, 1 part of the organic peroxide vulcanizing agent of Example 1, and the amounts of

adhesion additive shown in Table V per 100 parts by weight of base. Then samples were prepared by molding these mixtures into slabs approximately 2.75 mm thick for 10 minutes at 171°C. The cured slabs were cut into test samples and evaluated for physical properties in accordance with ASTM-D412 for tensile strength and elongation and ASTM-D2240 for durometer, Shore A scale. The test results are shown in Table V.

The test results show that the adhesion additives do not effect the physical properties of the stock to a significant degree in the amounts tested.

Example 5

An adhesion additive composition was prepared by stirring together in a container 145 parts of ethylpolysilicate, 27 parts of gamma-methacryloxypropyltrimethoxysilane, and 30 parts of fume silica having a surface area of approximately 250 $m^2/g$ to give a mixture, then 100 parts of polydimethylsiloxane gum having dimethylvinylsiloxy endblocking and diorganosiloxy units composed of about 0.14 mole percent methylvinylsiloxane units and about 99.86 mole percent dimethylsiloxane units was placed on a two roll rubber mill and the above mixture was mixed into the gum to yield a paste-like adhesion additive composition.

A silicone rubber composition was prepared by milling together on a two roll rubber mill 100 parts of the silicone rubber base of Example 1, 1 part of the organic peroxide vulcanizing agent of Example 1, and 5 parts of the above adhesion additive composition. The silicone rubber composition was molded against cleaned panels of aluminum, copper, brass, stainless steel, and cold-rolled steel, using a sheet of polyester film to prevent adhesion to the press plates. The rubber could not be removed from any of the substrates without causing cohesive failure in the rubber. The polyester sheet could not be removed from the rubber as the bond was stronger than the polyester sheet and the sheet broke.

Example 6

A silicone rubber composition was prepared by milling together on a two roll rubber mill 100 parts of the silicone rubber base of Example 1, 2.4 parts of ethylpolysilicate, 0.45 part of gamma-methacryloxypropyltrimethoxysilane and organic peroxide catalyst. Sample "A" was catalyzed with 1.2 parts of 2,4-dichlorobenzoyl peroxide paste. Sample "B" was catalyzed with 0.5 part 2,4-dichlorobenzoyl peroxide paste and 0.7 part para-chlorobenzoyl peroxide paste. These compositions have the same ingredients and amounts as in Example 5 except for the peroxide. The compositions were molded for 5 minutes at 116°C against cleaned panels and tested as in Example 5. The results were as shown in Table VI. Sample "C" is Example 5 shown as an illustration of the use of the preferred 2,5-bis(tert-butylperoxy)-2,5-dimethylhexane.

Example 7

A comparative example was prepared by milling together on a two roll rubber mill 100 parts of the silicone rubber base of Example 1, 1.3 parts of 2,4-dichlorobenzoyl peroxide paste, and the amount of gamma-methacryloxypropyltrimethoxysilane shown in Table VII. The compositions were molded and tested as in the second method of Example 1 but vulcanizing for 5 minutes at 116°C.

Unlike the result in Example 6, the use of only the gamma-methacryloxypropyltrimethoxysilane did not produce satisfactory adhesion even after further heating and with higher amounts of additive.

TABLE I

Peel adhesion, kilonewton per metre

| Adhesion additive<br>iron oxide | None[1]<br>Yes | 0.5 pt X[2]<br>1.5 Y<br>No | 0.25 X[2]<br>3.0 Y<br>No | 0.25 X[2]<br>—<br>No | 0.5 X[1]<br>—<br>Yes | —[2]<br>1.0 Y<br>No | —[2]<br>1.5 Y<br>No | [2]<br>3.0 Y<br>No |
|---|---|---|---|---|---|---|---|---|
| Substrate | | | | | | | | |
| Aluminum | 0.12A | 13.1C | 1.35A | 11.7C | 3.68C | —A | 0.79A | —A |
| Cold rolled steel | 0.35A | 11.4C | 14.9C | 10.5C | 3.32C | —A | 1.36A | —C |
| Stainless steel | 0.52A | 11.4C | 16.6C | 12.2C | 3.15C | —A | 2.62A | —C |
| Glass fabric | 0.88A | 7.35C | 9.62C | 7.35C | 3.68*A | —A | 2.28A | —A+ |

Adhesion additive:

X is gamma-methacryloxypropyltrimethoxysilane

Y is ethylpolysilicate

+ Bonded, but still failed adhesively

* Value due to mechanical bonding since failure was observed to be adhesive

[1] Rubber calendered on glass fabric

[2] Rubber molded with glass fabric backing.

TABLE II

| Adhesion additive | Peel adhesion, kilonewton per metre | | | |
|---|---|---|---|---|
| | None | 0.5X —Y | —X 3.0Y | .25X 1.5Y |
| Substrates | | | | |
| Aluminum | 0A | 7.8C | 0.35A | 9.9C |
| Cold rolled steel | 0A | 7.5C | 4.7C | 10.5C |
| Stainless steel | 0.52A | 7.4C | 0.88A/C | 11.4C |
| Glass fabric | 0.35A | 0.9C | 0.79A | 6.6C |
| Copper | 0A | 5.8C | 0.79A | 9.6C |
| Brass | 0A | 5.8C | 0.61A | 7.5C |

TABLE III

| Adhesion additive | Adhesion rating | | | | |
|---|---|---|---|---|---|
| | None | 0.1 pt X | 1.0Y | 3.0Y | 0.1X 1.0Y |
| Substrate | | | | | |
| Glass fabric | 2 | 4 | 2 | 2 | 5 |
| Aluminum | 1 | 4 | 1 | 2 | 4 |
| Cold rolled steel | 1 | 3 | 1 | 5 | 5 |
| Stainless steel | 1 | 2 | 1 | 5 | 5 |
| Copper | 1 | 1 | 1 | 4 | 4 |
| Brass | 1 | 1 | 1 | 4 | 4 |

TABLE IV

| Adhesion additive | Adhesion rating | | | | | |
|---|---|---|---|---|---|---|
| | None | 0.1 pt X | 0.1X | 1.0Y | 2.0Y | 0.1X 1.0Y |
| Filler loading | None | None | 25 pt | 25 pt | 50 pt | 50 pt |
| Substrate | | | | | | |
| Glass fabric | 1 | 4 | 3 | 4 | 4 | 5 |
| Aluminum | 1 | 5 | 5 | 1 | 1 | 5 |
| Cold rolled steel | 1 | 2 | 1 | 5 | 5 | 5 |
| Stainless steel | 1 | 2 | 1 | 5 | 5 | 5 |
| Copper | 1 | 1 | 1 | 1 | 1 | 4 |

TABLE V

| Adhesion additive | None | 0.25X | 1.0Y | 0.25X 1.0Y | 0.5X 1.0Y | 0.25X 2.0Y |
|---|---|---|---|---|---|---|
| Durometer, Shore A | 75 | 79 | 75 | 76 | 80 | 75 |
| Tensile strength, MPa | 6.75 | 8.16 | 7.92 | 8.06 | 7.01 | 7.48 |
| Elongation, % | 230 | 190 | 230 | 180 | 170 | 190 |

TABLE VI

| Sample | Type of adhesion failure A | B | C |
|---|---|---|---|
| Substrate | | | |
| Glass fabric | A | A | — |
| Aluminum | A | A | C |
| Cold rolled steel | A/C | A | C |
| Stainless steel | A | A | C |
| Copper | A | C | C |
| Brass | A | A | C |

After 3 months storage, on retesting, the stainless steel panels gave cohesive failure. All others were the same as originally tested. The panels were then cured an additional 30 minutes at 170°C. The results then found were:

| Substrate | | | |
|---|---|---|---|
| Aluminum | C | C | — |
| Cold rolled steel | C | C | — |
| Stainless steel | C | C | — |
| Copper | A | — | — |

It is apparent that the choice of peroxide and the cure conditions effect the degree of adhesion obtained.

TABLE VII

| Adhesion additive, parts | None | 0.15 | 0.75 | 1.5 | 3.0 |
|---|---|---|---|---|---|
| | Rubber properties | | | | |
| Durometer, Shore A | 40 | 45 | 46 | 38 | 35 |
| Tensile strength, MPa | 980 | 1000 | 1000 | 1020 | 1000 |
| Elongation, percent | 510 | 440 | 420 | 600 | 780 |
| Substrate | Type of adhesion failure | | | | |
| Aluminum | A | A | A | A | A |
| Stainless steel | A | A | A | A | A |
| After heating 4 hours at 200°C | | | | | |
| Aluminum | A | A | A | A | A |
| Stainless steel | A | A | A | A | A |

## Claims

1. An adhesion additive composition for improving the bonding of heat vulcanized silicone rubber to substrates, the composition being in the form of a paste capable of storage in the absence of moisture, the composition consisting essentially of:

(a) 100 parts by weight of polydiorganosiloxane gum, wherein the organic radicals are selected from the group consisting of methyl, vinyl, phenyl, 3,3,3-trifluoropropyl radicals, and mixtures thereof,
(d) sufficient filler to yield a paste and

characterized in that it includes

(b) from 70 to 220 parts by weight of ethylpolysilicate,
(c) from 10 to 40 parts by weight of acryloxyalkylsilane of the formula

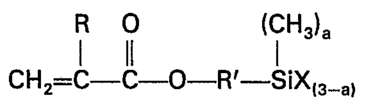

in which R is selected from the group consisting of hydrogen and methyl radical, R′ is an alkylene radical of from 1 to 4 inclusive carbon atoms, X is a radical selected from the group consisting of lower alkoxy radicals of from 1 to 3 inclusive carbon atoms and acetoxy radical, and *a* is from 0 to 2 inclusive.

2. The composition of claim 1 in which the acryloxyalkylsilane is gamma-methacryloxypropyltrimethoxysilane.

3. The composition of claim 2 in which (b) is from 110 to 160 parts by weight and (c) is from 20 to 35 parts by weight, and (d) is a reinforcing silica.

4. A heat vulcanizable silicone rubber composition comprising 100 parts by weight of silicone rubber base consisting essentially of polydiorganosiloxane containing organic radicals selected from the group consisting of methyl, vinyl, phenyl, and 3,3,3-trifluoropropyl, reinforcing silica filler, and anticrepe-hardening agent; from 0 to 150 parts by weight of siliceous extending filler with an average particle size of less than 25 micrometres and a surface area of less than 50 $m^2/g$; from 0.1 to 5 parts by weight of organic peroxide suitable for vulcanizing the silicone rubber base; and characterized in that it includes from 1 to 5 parts by weight ethylpolysilicate; and from 0.1 to 1 part by weight acryloxyalkylsilane of the formula

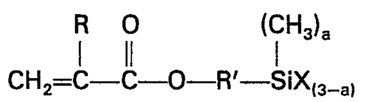

in which R is selected from the group consisting of hydrogen and methyl radical, R′ is an alkylene radical of from 1 to 4 inclusive carbon atoms, X is a radical selected from the group consisting of lower alkoxy radicals of from 1 to 3 inclusive carbon atoms and acetoxy radical, and *a* is from 0 to 2 inclusive.

5. The composition of claim 4 in which the acryloxyalkylsilane is gamma-methacryloxypropyltrimethoxysilane.

6. A method of bonding silicone rubber to a substrate characterized by

(1) mixing silicone rubber stock of the type comprising 100 parts by weight of silicone rubber base, from 0 to 150 parts by weight of siliceous extending filler with an average particle size of less than 25 micrometres and a surface area of less than 50 $m^2/g$, and from 0.1 to 5 parts by weight of organic peroxide suitable for vulcanizing the silicone rubber base, with sufficient adhesion additive composition consisting essentially of

(a) 100 parts by weight of polydiorganosiloxane gum, wherein the organic radicals are selected from the group consisting of methyl, vinyl, phenyl, 3,3,3-trifluoropropyl radicals and mixtures thereof,
(b) from 70 to 220 parts by weight of ethylpolysilicate,
(c) from 10 to 40 parts by weight of acryloxyalkylsilane of the formula

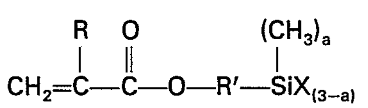

in which R is selected from the group consisting of hydrogen and methyl radical, R′ is an alkylene radical of from 1 to 4 inclusive carbon atoms, X is a radical selected from the group consisting of lower alkoxy radicals of from 1 to 3 inclusive carbon atoms and acetoxy radical, and *a* is from 0 to

2 inclusive, to give from 1 to 5 parts by weight ethylpolysilicate and from 0.1 to 1 part by weight acryloxyalkylsilane per 100 parts by weight of silicone rubber base, to yield a heat vulcanizable silicone rubber composition,

(2) forming a combination wherein the silicone rubber composition of (1) contacts a surface of the substrate and thereafter

(3) heating the combination to a temperature high enough to vulcanize the silicone rubber composition, producing a vulcanized silicone rubber bonded to the substrate surface.

7. The method of claim 6 in which the acryloxyalkylsilane is gamma-methacryloxypropyltrimethoxysilane.

8. The method of claim 7 in which the organic peroxide is a vinyl specific peroxide and the forming and heating are by means of a hot mold.

9. The method of claim 7 in which the organic peroxide is a nonvinyl specific peroxide and the forming is by means of extrusion and the heating is by means of hot gases.

**Patentansprüche**

1. Eine Haftadditiv-Zusammensetzung zur Verbesserung der Haftung von durch Wärme vulkanisiertem Silikonkautschuk an Substraten, wobei die Zusammensetzung in der Abwesenheit von Feuchtigkeit in Form einer lagerfähigen Paste vorliegt, dadurch gekennzeichnet, dass die Paste im wesentlichen besteht aus

(a) 100 Gewichtsteilen eines Polydiorganosiloxangummis, dessen organische Reste ausgewählt sind aus der Gruppe bestehend aus Methyl-, Vinyl-, Phenyl-, 3,3,3-Trifluoropropylresten und Mischungen davon,
(d) ausreichend Füllstoff, um eine Paste zu bilden und

dadurch gekennzeichnet ist, dass sie einschliesst

(b) 70 bis 220 Gewichtsteile Ethylpolysilikat,
(c) 10 bis 40 Gewichtsteile Acryloxyalkylsilan der Formel

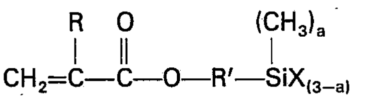

in der R ausgewählt ist aus der Gruppe bestehend aus Wasserstoff und Methylrest, R′ ein Alkylenrest ist mit 1 bis einschliesslich 4 Kohlenstoffatomen, X ein Rest ist, ausgewählt aus der Gruppe bestehend aus niedrigen Alkoxyresten mit 1 bis einschliesslich 3 Kohlenstoffatomen und Acetoxyrest und *a* 0 bis einschliesslich 2 ist.

2. Die Zusammensetzung nach Anspruch 1, in der das Acryloxyalkylsilan gamma-Methacryloxypropyltrimethoxysilan ist.

3. Die Zusammensetzung nach Anspruch 2, in der (b) 110 bis 160 Gewichtsteile ist und (c) 20 bis 35 Gewichtsteile ist und (d) verstärkende Kieselsäure ist.

4. Eine durch Wärme vulkanisierbare Silikonkautschuk-Zusammensetzung, enthaltend 100 Gewichtsteile einer Silikonkautschukbasis, bestehend im wesentlichen aus Polydiorganosiloxan, enthaltend organische Reste ausgewählt aus der Gruppe bestehend aus Methyl, Vinyl, Phenyl und 3,3,3-Trifluoropropyl, verstärkendem Kieselsäurefüllstoff und Antikriechmittel; 0 bis 150 Gewichtsteilen eines silikatischen Streckfüllstoffs mit einer mittleren Teilchengrösse von weniger als 25 Mikrometer und einem Oberflächenbereich von weniger als 50 $m^2/g$; 0.1 bis 5 Gewichtsteilen eines für die Vulkanisation der Silikonkautschukbasis geeigneten organischen Peroxids und dadurch gekennzeichnet, dass sie einschliesst 1 bis 5 Gewichtsteile Ethylpolysilikat; und 0.1 bis 5 Gewichtsteile Acryloxyalkylsilan der Formel

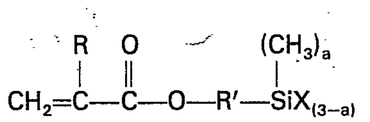

in der R ausgewählt aus der Gruppe ist, bestehend aus Wasserstoff und Methylrest, R′ ein Alkylenrest mit 1 bis einschliesslich 4 Kohlenstoffatomen ist, X ein Rest, ausgewählt aus der Gruppe ist, bestehend aus niedrigen Alkoxyresten mit 1 bis einschliesslich 3 Kohlenstoffatomen und Acetoxyrest und *a* 0 bis einschliesslich 2 ist.

5. Die Zusammensetzung nach Anspruch 4, dadurch gekennzeichnet, dass das Acryloxyalkylsilan gamma-Methacryloxypropyltrimethoxysilan ist.

6. Ein Verfahren zum Verbinden von Silikonkautschuk mit einem Substrat, gekennzeichnet durch

(1) Mischen eines Silikonkautschuk-Materials des Typs, enthaltend 100 Gewichtsteile einer Silikonkautschukbasis, 0 bis 150 Gewichtsteile eines silikatischen Streckfüllstoffs mit einer mittleren Teilchengrösse von weniger als 25 Mikrometer und einem Oberflächenbereich von weniger als 50 $m^2/g$ und 0.1 bis 5 Gewichtsteilen eines für die Vulkanisation der Silikonkautschukbasis geeigneten organischen Peroxids mit einer ausreichenden Menge einer Haftadditiv-Zusammensetzung, bestehend im wesentlichen aus

(a) 100 Gewichtsteilen Polydiorganosiloxangummi, in dem die organischen Reste ausgewählt sind aus der Gruppe, bestehend aus Methyl-, Vinyl-, Phenyl-, 3,3,3-Trifluoropropylresten und Mischungen davon,
(b) 70 bis 220 Gewichtsteilen Ethylpolysilikat,
(c) 10 bis 40 Gewichtsteilen Acryloxyalkylsilan der Formel

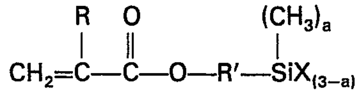

in der R ausgewählt ist aus der Gruppe, bestehend aus Wasserstoff und Methylrest, R′ ein Alkylenrest mit 1 bis einschliesslich 4 Kohlenstoffatomen ist, X ein Rest ist, ausgewählt aus der Klasse, bestehend aus niedrigen Alkoxyresten und 1 bis einschliesslich 3 Kohlenstoffatomen und Acetoxyrest und *a* 0 bis einschliesslich 2 ist, so dass 1 bis 5 Gewichtsteile Ethylpolysilikat und 0.1 bis 1 Gewichtsteil Acryloxyalkylsilan auf 100 Gewichtsteile der Silikonkautschukbasis vorhanden sind, um eine durch Wärme härtbare Silikonkautschuk-Zusammensetzung zu bilden,

(2) Formen einer Kombination, bei der die Silikonkautschuk-Zusammensetzung (1) eine Oberfläche des Substrats berührt und danach

(3) Erwärmen der Kombination auf eine ausreichend hohe Temperatur, um die Silikonkautschuk-Zusammensetzung zu vulkanisieren, so dass ein mit der Substratoberfläche verbundener vulkanisierter Silikonkautschuk entsteht.

7. Das Verfahren nach Anspruch 6, dadurch gekennzeichnet, dass das Acryloxyalkylsilan gamma-Methacryloxypropyltrimethoxysilan ist.

8. Das Verfahren nach Anspruch 7, dadurch gekennzeichnet, dass das organische Peroxid ein vinylspezifisches Peroxid ist und das Formen und das Erwärmen durch eine heisse Form erfolgt.

9. Das Verfahren nach Anspruch 7, dadurch gekennzeichnet, dass das organische Peroxid ein nicht-vinylspezifisches Peroxid ist und das Formen durch Extrudieren und das Erwärmen durch heisse Gase erfolgt.

**Revendications**

1. Une composition d'additif d'adhésion pour améliorer la liaison de caoutchouc de silicone thermovulcanisé à des substrats, la composition étant sous forme d'une pâte pouvant être conservée en l'absence d'humidité, la composition étant constituée de:

a) 100 parties en poids de gomme polydiorganosiloxane, dans laquelle les radicaux organiques sont choisis dans le groupe constitué des radicaux méthyle, vinyle, phényle, 3,3,3-trifluoropropyle et des mélanges de ceux-ci,
d) suffisamment de charge pour donner une pâte,

caractérisée en ce qu'elle comprend

b) de 70 à 220 parties en poids de polysilicate d'éthyle,
c) de 10 à 40 parties en poids d'acryloxyalcoylsilane de la formule

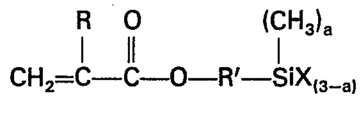

où R est choisi dans le groupe constitué de l'hydrogène et du radical méthyle, R′ est un radical alcoylène de 1 à 4 atomes de carbone inclusivement, X est un radical choisi dans le groupe constitué des radicaux alcoxy inférieurs de 1 à 3 atomes de carbone inclusivement et du radical acétoxy, et *a* vaut de 0 à 2 inclusivement.

2. La composition de la revendication 1, dans laquelle l'acryloxyalcoylsilane est le gamma-méthacryloxypropyltriméthoxysilane.

3. La composition de la revendication 2, dans laquelle (b) représente de 110 à 160 parties en poids et (c) représente de 20 à 35 parties en poids, et (d) est une silice renforçante.

4. Une composition de caoutchouc de silicone thermo-vulcanisable comprenant 100 parties en poids de base de caoutchouc de silicone constituée essentiellement de polydiorganosiloxane contenant des radicaux organiques choisis dans le groupe constitué des radicaux méthyle, vinyle, phényle et 3,3,3-trifluoropropyle, de silice renforçante et d'un agent contre le durcissement du crêpe; de 0 à 150 parties en poids de charge diluante siliceuse ayant une grosseur de particules moyenne de moins de 25 micromètres et une surface spécifique de moins de 50 $m^2/g$; de 0,1 à 5 parties en poids de peroxyde organique convenant pour vulcaniser la base de caoutchouc de silicone; caractérisée en ce qu'elle contient de 1 à 5 parties en poids de polysilicate d'éthyle, et de 0,1 à 1 partie en poids d'acryloxyalcoylsilane de la formule

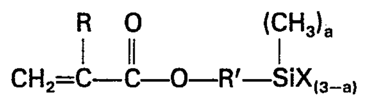

où R est choisi dans le groupe constitué de l'hydrogène et du radical méthyle, R' est un radical alcoylène de 1 à 4 atomes de carbone inclusivement, X est un radical choisi dans le groupe constitué des radicaux alcoxy inférieurs de 1 à 3 atomes de carbone inclusivement et du radical acétoxy, et *a* vaut de 0 à 2 inclusivement.

5. La composition de la revendication 4, dans laquelle l'acryloxyalcoylsilane est le gamma-méthacryloxypropyltriméthoxysilane.

6. Un procédé pour lier du caoutchouc de silicone à un substrat, caractérisé en ce que:

(1) on mélange une matière de départ caoutchouc de silicone du type comprenant 100 parties en poids de base de caoutchouc de silicone, de 0 à 150 parties en poids de charge diluante siliceuse ayant une grosseur de particules moyenne de moins de 25 micromètres et une surface spécifique de moins de 50 $m^2/g$, et de 0,1 à 5 parties en poids de peroxyde organique convenant pour vulcaniser la base de caoutchouc de silicone, avec une quantité suffisante d'une composition d'additif d'adhésion constitué essentiellement de

a) 100 parties en poids de gomme polydiorganosiloxane dans laquelle les radicaux organiques sont choisis dans le groupe constitué des radicaux méthyle, vinyle, phényle, 3,3,3-trifluoropropyle et des mélanges de ceux-ci,
b) de 70 à 220 parties en poids de polysilicate d'éthyle,
c) de 10 à 40 parties en poids d'acryloxyalcoylsilane de la formule

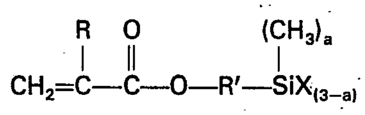

où R est choisi dans le groupe constitué de l'hydrogène et du radical méthyle, R' est un radical alcoylène de 1 à 4 atomes de carbone inclusivement, X est un radical choisi dans le groupe constitué des radicaux alcoxy inférieurs de 1 à 3 atomes de carbone inclusivement et du radical acétoxy, et *a* vaut de 0 à 2 inclusivement, pour donner de 1 à 5 parties en poids de polysilicate d'éthyle et de 0,1 à 1 partie en poids d'acryloxyalcoylsilane par 100 parties en poids de base de caoutchouc de silicone, pour obtenir une composition de caoutchouc de silicone thermo-vulcanisable,

(2) On forme une combinaison dans laquelle la composition de caoutchouc de silicone obtenue en (1) est en contact avec une surface du substrat, et ensuite

(3) On chauffe la combinaison à une température suffisamment élevée pour vulcaniser la composition de caoutchouc de silicone, produisant un caoutchouc de silicone vulcanisé lié à la surface du substrat.

7. Le procédé de la revendication 6, dans lequel l'acryloxyalcoylsilane est le gamma-méthacryloxypropyltriméthoxysilane.

8. Le procédé de la revendication 7, dans lequel le peroxyde organique est un peroxyde spécifique pour composés vinyliques et le formage et le chauffage sont effectués au moyen d'un moule chaud.

9. Le procédé de la revendication 7, dans lequel le péroxyde organique est un péroxyde spécifique pour composés non vinyliques, et le formage est effectué par extrusion et le chauffage est effectué par des gaz chauds.